# EUROPEAN PATENT APPLICATION

(11) **EP 1 515 528 A1**
(43) Date of publication of application: **16.03.2005**
(21) Application number: 03077848.4
(22) Date of filing: 10.09.2003
(51) Int. Cl.: H04M 3/42, H04M 7/00, H04M 3/493

(54) **Method and means for interconnecting users of a telephone network using speech recognition**

(71) Applicant: Nederlandse Organisatie voor Toegepast-Natuurwetenschappelijk Onderzoek TNO, 2628 VK Delft (NL)
(72) Inventor: Aasman, Jannes, 2333 AE Leiden (NL); Jongebloed, Hans Albert, 2497 WE Den Haag (NL)
(74) Representative: Prins, Adrianus Willem, Mr. Ir.

(57) **Abstract**

Method and means for interconnecting users (1) of a telephone network (2). A first user (1a) enters a second user's name to a name server (3), which searches for the second user's telephone number (1b) and initiates via the PABX (6) a connection between both users. The first user may enter the second user's name to the name server via a public telephone network (4) or via a public data network (5) after conversion of the entered user name into a proper data format. The name server (3) transmits the retrieved second user's telephone number to the PABX (6) via a public data network (5).

## Description

### FIELD OF THE INVENTION

The present invention relates to a method and means for interconnecting users of a telephone network, wherein a first user enters a second user's name to a name server, after which the name server searches for the second user's telephone number and initiates, via telephone network control means, a connection between the first user and said telephone number.

### BACKGROUND OF THE INVENTION

The above service, method and means are known as a "voice connect system" for use within a PABX environment, e.g. of a professional organization. The service enables employees to call the name server's telephone number, to enter a colleague's name vocally and to be connected automatically with that colleague's telephone terminal. The service makes use of speech recognition to recognize the colleague's name and to retrieve the right telephone number in a database to make the desired telephone connection between the colleagues.

At this moment the service is available as complete package, inclusive the hardware and software, which can be sold and installed at the relevant organization's site.

Many potential clients would prefer an ASP (Application Service Provider) solution, to prevent that the complete package needs to be bought, installed and maintained. However, in practice, operation costs of an ASP solution will be rather expensive too. The reason is that a call, which in a PABX environment is free of charge, using the ASP solution has to be routed two times through the public telephone network between the PABX and the (external) ASP's name server, viz. one external connection from the PABX to the name server and a second one backwards from the name server to the PABX. Moreover, during the whole conversation between two colleagues using the ASP's name server, the double connection via the public network between the PABX and the name server remains in use and will be charged accordingly.

### SUMMARY OF THE INVENTION

One advancement may be achieved by transmitting the second user's telephone number from the name server to the control means (PABX) of the (private) telephone network via a public data network like e.g. the (free of charge) internet, instead of via the (charged) public telephone network.

A further advancement may be obtained when the first user, instead of via the public telephone network, enters the second user's name to the name server via said public data network, e.g. the internet, too. The second user's name, entered by the first user, may be converted into a digital audio file (e.g. WAV, MP3) format and consecutively transmitted to the name server via said public data network. Instead, the second user's name, entered by the first user, may be converted into streaming audio and transmitted to the name server via said public data network.

By using e.g. the internet, which in practice is free of charge for professional organizations, instead of the public telephone network, which is charged on time-to-use basis, application of a "voice connect" ASP will be much cheaper than before, making it much more attractive and profitable to implement in a professional organization's environment.

Below a system will be discussed which is fit for operating the above method.

### FIGURES

Figure 1 shows a first embodiment of a system fit for interconnecting users of a telephone network by means of a name server of an ASP.
Figure 2 shows a second embodiment of such a system.

### EXEMPLARY EMBODIMENTS

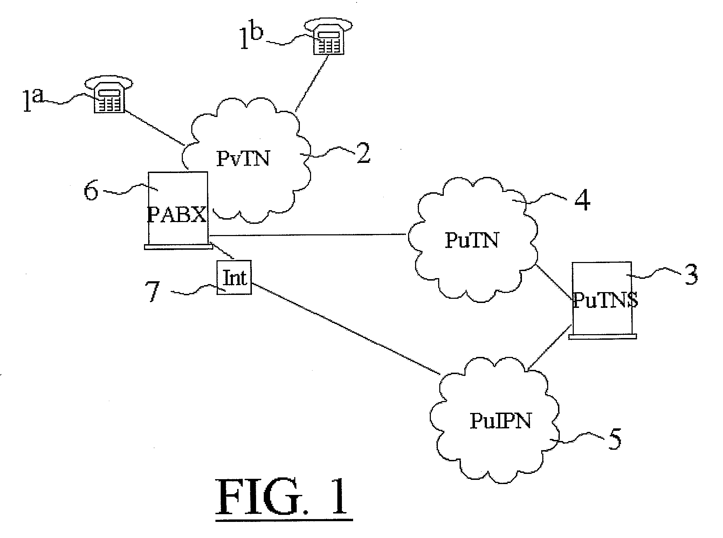

Figure 1 shows a system fit for interconnecting users 1 of a telephone network 2 by means of a telephone name server 3 of an ASP, via the public telephone network 4 and a public data network like the public IP data network called "the internet" 5. The private network 2 is controlled by PABX 6.

A first user 1a initiates -e.g. by calling a special PABX telephone number- a connection with the (external) name server 3 via the public telephone network 4, and enters the name (or maybe another search item) of a second user 1b. A database of name server 3 has been loaded previously with the names (and/or other search items) and corresponding telephone numbers of all relevant users/subscribers of the private network 2. After having setup a call to the name server, user 1a inputs (maybe after a "welcome message" from the name server to the user) the name of the relevant colleague (residing at the location of terminal 1b).

Upon reception of the second user's name, received via the public telephone network 4, name server 3 starts searching, within its database, for the second user's telephone number and transmits the second user's telephone number to the PABX 6 via the public IP network 5. The private network control PABX 6 is fit, by means of a proper interface or extension 7, to establish the desired connection between the first user 1a and the telephone number of the second user 1b under control of the second user's telephone number received from the name server via the public data network 5.

In the embodiment shown in figure 1, the name server 3 is fit to receive the second user's name, entered by the first user, via the public telephone network 4, while the "response connection" goes via the IP network 5, thus saving one (charged) public telephone connection compared with the state-of-the-art.

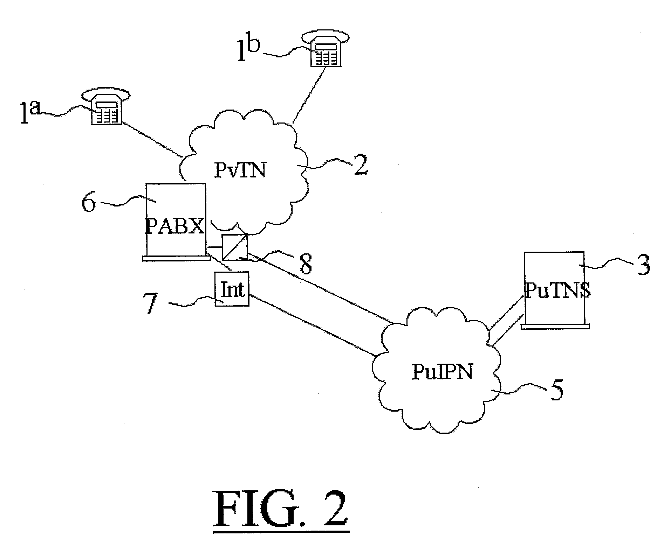

Figure 2 shows a second embodiment, wherein, like the first public telephone connection (between the PABX 6 and the name server 3) also the second charged public telephone connection (between the name server 3 and the PABX 6) has been changed into a free IP connection, via IP data network 5.

To enable the name server 3 to receive the second user's name, entered by the first user, via said public data network 5, a converter 8, e.g. as an extension or plug-in unit of the PABX 6, is provided which is fit for converting the second user's name entered by the first user, into a digital audio file format, e.g. WAV or MP3 format, and transmitting such a file to the name server via the IP data network 5. Instead of conversion into e.g. a WAV or MP3 file or the like, the second user's name may be converted into streaming audio format.

Finally, for sake of completeness, some remarks concerning the capabilities of name server 3. The name server 3 comprises, to be fit for the system as described above, means for enabling a first user 1a to enter the name of the second user 1b, for searching for the second user's telephone number and for initiating, via the telephone network control means, the PABX 6, a connection between the first user and said telephone number. The name server 3, moreover, comprises means for transmitting the retrieved second user's telephone number to the PABX via the public IP data network 5. The name server 3 may comprise means for receiving the second user's name, entered by the first user, via the public telephone network 4, as illustrated in figure 1 or, as illustrated in figure 2, via the public IP data network 5 too.

## Claims

1. Method for interconnecting users (1) of a telephone network (2), the method including next steps:
- a first user enters a second user's name to a name server;
- the name server searches for the second user's telephone number and initiates, via telephone network control means (6), a connection between the first user (1a) and said telephone number (1b),
characterized that
- the name server (3) transmits the second user's telephone number to said control means (6) via a public data network (5).

2. Method according to claim 1, wherein the first user enters the second user's name to the name server (3) via a public telephone network (4).

3. Method according to claim 1, wherein the first user enters the second user's name to the name server (3) via said public data network (5).

4. Method according claim 1, wherein the telephone network for interconnecting said users is a private telephone network (2).

5. Method according to claim 1 or 3, wherein said public data network is the internet (5).

6. Method according to claim 3, wherein the second user's name, entered by the first user, is converted into a digital audio file format and consecutively transmitted to the name server (3) via said public data network (5).

7. Method according to claim 3, wherein the second user's name, entered by the first user, is converted into a streaming audio format and consecutively transmitted to the name server (3) via said public data network (5).

8. System fit for interconnecting users (1) of a telephone network (2), comprising a name server which is enabled for a first user to enter a second user's name, for searching for the second user's telephone number and for initiating, via telephone network control means (6), a connection between the first user (1a) and said telephone number (1b), comprising that the name server (3) is fit to transmit the second user's telephone number to said control means via a public data network (5) and that the control means (6) are fit to establish said connection between the first user (1a) and said telephone number (1b) under control of the second user's telephone number received from the name server (3) via the public data network (5).

9. System according to claim 8, wherein the name server (3) is fit to receive the second user's name, entered by the first user, via a public telephone network (4).

10. System according to claim 8, wherein the name server is fit to receive the second user's name, entered by the first user, via said public data network (5).

11. System according claim 8, wherein the telephone network for interconnecting said users is a private telephone network (2).

12. System according to claim 8 or 10, wherein said public data network is the internet (5).

13. System according to claim 10, comprising means (8) for converting the second user's name, entered by the first user, into a digital audio file format and transmitting it to the name server (3) via said public data network (5).

14. System according to claim 10, comprising means (8) for converting the second user's name, entered by the first user, into streaming audio format and transmitting it to the name server (3) via said public data network (5).

15. Name server (3), fit for being connectable with a system fit for interconnecting users (1) of a telephone network (2), the name server comprising means for enabling a first user (1a) to enter a second user's name (1b), for searching the second user's telephone number and for initiating, via telephone network control means (6), a connection between the first user and said telephone number, the name server, moreover, comprising means for transmitting the second user's telephone number to said control means via a public data network (5).

16. Name server according to claim 15, comprising means for receiving the second user's name, entered by the first user, via a public telephone network (4).

17. Name server according to claim 15, comprising means for receiving the second user's name, entered by the first user, via said public data network (5).
